Europäisches Patentamt

European Patent Office

Office européen des brevets

(19)

(11) Veröffentlichungsnummer: **0 203 341**
**A1**

## (12) EUROPÄISCHE PATENTANMELDUNG

(21) Anmeldenummer: **86105282.7**

(22) Anmeldetag: **16.04.86**

(51) Int. Cl.⁴: **G 01 F 23/04**
**// F01M11/12**

(30) Priorität: **30.05.85 DE 3519343**

(43) Veröffentlichungstag der Anmeldung: **03.12.86**
**Patentblatt 86/49**

(84) Benannte Vertragsstaaten: **FR GB IT SE**

(71) Anmelder: **Hella KG Hueck & Co., Postfach 28 40,**
**D-4780 Lippstadt (DE)**

(72) Erfinder: **Eickhoff, Willi, Lippstädter Strasse 26,**
**D-4788 Warstein-Waldhausen (DE)**
Erfinder: **Heddergott, Harry, Kaempenstrasse 12,**
**D-4790 Paderborn-Elsen (DE)**

(54) **Vorrichtung zur Messung und Überwachung des Füllstandes eines Flüssigkeitsbehälters.**

(57)    Bei einer Vorrichtung zur Messung und Überwachung des Füllstandes eines Flüssigkeitsbehälters, insbesondere des Ölstandes eines Kraftfahrzeugmotors, mit einer im wesentlichen starren optischen Sonde (1), die am Ende eines im wesentlichen biegsamen Stabes (2) angeordnet ist, ist erfindungsgemäß die Sonde (1) durch eine Steckverbindung mit mindestens einem Dichtelement (5) mit der glatten Innenwand (4) des an der der Sonde zugewandten Seite rohrförmig ausgebildeten Stabes (2) verbunden. Dabei weist die Sonde an der dem Stab zugewandten Seite mindestens eine umlaufende Nut (3, 6) auf, in die das Dichtelement (5) eingelegt ist. Die Vorrichtung hat den Vorteil, daß sie dauerhaft dicht, temperaturbeständig und platzsparend ist. Zur Befestigung der Sonde am flexiblen Stab sind keine weiteren Mittel erforderlich.

EP 0 203 341 A1

- 1 -

## Vorrichtung zur Messung und Überwachung des Füllstandes eines Flüssigkeitsbehälters.

Die Erfindung bezieht sich auf eine Vorrichtung zur Messung und Überwachung des Füllstandes eines Flüssigkeitsbehälters, insbesondere des Ölstands eines Kraftfahrzeugmotors, mit einer aus einem lichtleitenden Material bestehenden Sonde, deren Oberfläche je nach Benetzung mit der zu messenden Flüssigkeit einen die Oberfläche berührenden, durch das lichtleitende Material geführten Lichtstrahl mehr oder weniger gut reflektiert, wobei die Sonde am unteren Ende eines biegsamen Stabs angeordnet und im Verhältnis zur Stablänge kurz ist.

In der DE-OS 32 46 340 ist eine derartige Vorrichtung beschrieben, wobei die Sonde am unteren Ende eines biegsamen Stabs angeordnet und im Verhältnis zur Stablänge kurz ist. Es ist nicht dargestellt, wie die Sonde mit dem Stab verbunden wird und welche Dichtungsmittel die Vorrichtung gegen die Flüssigkeit abdichten, insbesondere, wenn die Vorrichtung im Ölsumpf eines Verbrennungsmotors angewendet werden soll.

Weiterhin ist aus der DE-OS 30 49 149 ein Ölmeßstab aus flexiblem Bandmetall bekannt, der an seinem Griffende eine Abdichtung aufweist, die zugleich den Ölmeßstab im Führungsrohr am Verbrennungsmotor befestigt. Dieser Ölmeßstab weist jedoch keine Sonde aus lichtleitendem Material am unteren Ende des flexiblen Stabs auf.

In der US-PS 34 24 004 ist eine Vorrichtung zur Messung und Überwachung des Füllstands eines Flüssigkeitsbehälters beschrieben, bei der die im wesentlichen rechteckige Sonde aus lichtleitendem Material mit eingefrästen Nuten in eine entsprechende Öffnung des Flüssigkeitsbehälters einrastet. Zusätzlich weist die Vorrichtung zum Abdichten der Rastverbindung gegen schwappende und spritzende Flüssigkeit ein ringförmiges Dichtelement auf, das zwischen Behälterwand und Sonde eingeklemmt ist und durch eine Nut in der Sonde geführt wird. Die Sonde wird jedoch direkt in die starre Behälterwand eingerastet. Die Dichtung an der Rastverbindung ist nicht als Dauerdichtung zum Abdichten eines Volumens, das sich ständig in der zu messenden Flüssigkeit befindet, geeignet.

Weiterhin ist aus der DE-OS 30 38 432 eine Vorrichtung bekannt, die unter anderem zur Messung und Überwachung des Füllstands eines Flüssigkeitsbehälters vorgesehen ist. Die Sonde aus lichtleitendem Material ist mit einem zylinderförmigen Elemet verbunden, das an seiner Umfangsfläche Rippen aufweist, die in dichtender Reibverbindung von einer entsprechenden Öffnung des Behälters aufgenommen werden. Das Element ist jedoch nicht stabförmig und starr ausgebildet. Die Sonde ist im Verhältnis zur Länge des Elements lang. Das Element wird in die starre Behälterwand eingerastet. Wie die Sonde am Element befestigt ist, wird nicht ausgeführt. Die dichtende Reibverbindung ist nicht als Dauerdichtung zum Abdichten eines Volumens, das sich ständig in der zu messenden Flüssigkeit befindet, geeignet.

Diese bekannten Vorrichtungen haben alle den Nachteil, daß die vorgeschlagenen Dichtmittel nur zum Abdichten gegen spritzende oder schwappende Flüssigkeiten geeignet sind. Es hat sich gezeigt, daß diese Dichtmittel nicht als Dauerdichtung zum Abdichten eines Raumes, der sich dauernd in der zu messenden Flüssigkeit befindet, geeignet sind. Bei allen bekannten Vorrichtungen ist es notwendig, daß die Dichtmittel zwischen starren Gehäuseteilen oder zwischen starrer Sonde und starrer Behälterwand eingepreßt werden. Dies ist jedoch bei Vorrichtungen nach der Gattung nicht der Fall, da die im wesentlichen starre Sonde am unteren Ende eines im wesentlichen flexiblen Stabs angeordnet ist. Die Dichtmittel der vorbekannten Vorrichtungen sind bei hohen Umgebungstemperaturen, wie sie z. B. bei Verwendung im Ölsumpf eines Verbrennungsmotors auftreten, nicht zuverlässig. Der Raumbedarf der Dichtmittel der vorbekannten Vorrichtungen ist so groß, daß z. B. eine Verwendung als Ersatz für herkömmliche Ölpeilstäbe, die durch eine sehr enge Einstecköffnung in den Ölsumpf eingeführt werden, nicht möglich ist.

Die Erfindung hat die Aufgabe, die Dichtung zwischen Sonde und dem im wesentlichen flexiblem Stab so auszugestalten, daß sie dauerhaft dicht, temperaturbeständig und platzsparend ist.

Diese Aufgabe wird dadurch gelöst, daß die Sonde an der dem Stab zugewandten Seite mindestens eine umlaufende Nut aufweist, in die mindestens ein Dichtelement eingelegt oder eingespritzt ist, daß der Stab mindestens an der der Sonde zugewandten Seite rohrförmig ausgebildet ist und eine glatte Innenwand aufweist und daß die Sonde durch eine Steckverbindung mit dem mindestens einen Dichtelement an der Innenwand dicht anliegend mit dem Stab verbunden ist.

Die Erfindung hat den Vorteil, daß durch die besondere Ausbildung der Dichtungsmittel zwischen Sonde und flexiblem Stab zur Befestigung der Sonde am flexiblen Stab keine weiteren Mittel erforderlich sind. Die Dichtmittel werden nur durch eine umlaufende Nut in dem dem flexiblen Rohr zugewandten Teil der Sonde geführt. Um ein Verrutschen des Dichtmittels und damit der Sonde im flexiblen Rohr zu verhindern, werden die elastischen und/oder plastischen Eigenschaften des flexiblen Stabs ausgenutzt. Durch die elastischen Eigenschaften preßt das Dichtungsmittel eine umlaufende Vertiefung in die Innenwand des flexiblen Stabs. Diese umlaufende Vertiefung verhindert ein Verrutschen der Sonde im flexiblen Stab. Das Fehlen einer zusätzlichen Befesti-

- 4 -

gungsvorrichtung verringert den erforderlichen Platzbedarf zusätzlich. Die mechanische Konstruktion wird vereinfacht und es sind nur wenige Teile zu montieren. Die Fertigung der erfindungsgemäßen Vorrichtung ist einfach, so daß die Fertigungskosten gesenkt werden können.

Weitere Ausbildungen und Verbesserungen ergeben sich aus den Unteransprüchen.

In den Zeichnungen sind Ausführungsbeispiele der Erfindung dargestellt, die im folgenden näher beschrieben werden.

Es zeigen

Fig. 1 ein erstes Ausführungsbeispiel der erfindungsgemäßen Vorrichtung im Schnitt durch die Längsachse der Vorrichtung,

Fig. 2 das gleiche Ausführungsbeispiel wie in Fig. 1 in erweiterter Darstellung,

Fig. 3 ein anderes Ausführungsbeispiel der Sonde der erfindungsgemäßen Vorrichtung im Schnitt durch die Längsachse der Sonde und

Fig. 4 das gleiche Ausführungsbeispiel wie in Fig. 3 in einem weiteren Schnitt und mit der Befestigung von Sonde und flexiblem Stab durch ein Stück Schrumpfschlauch.

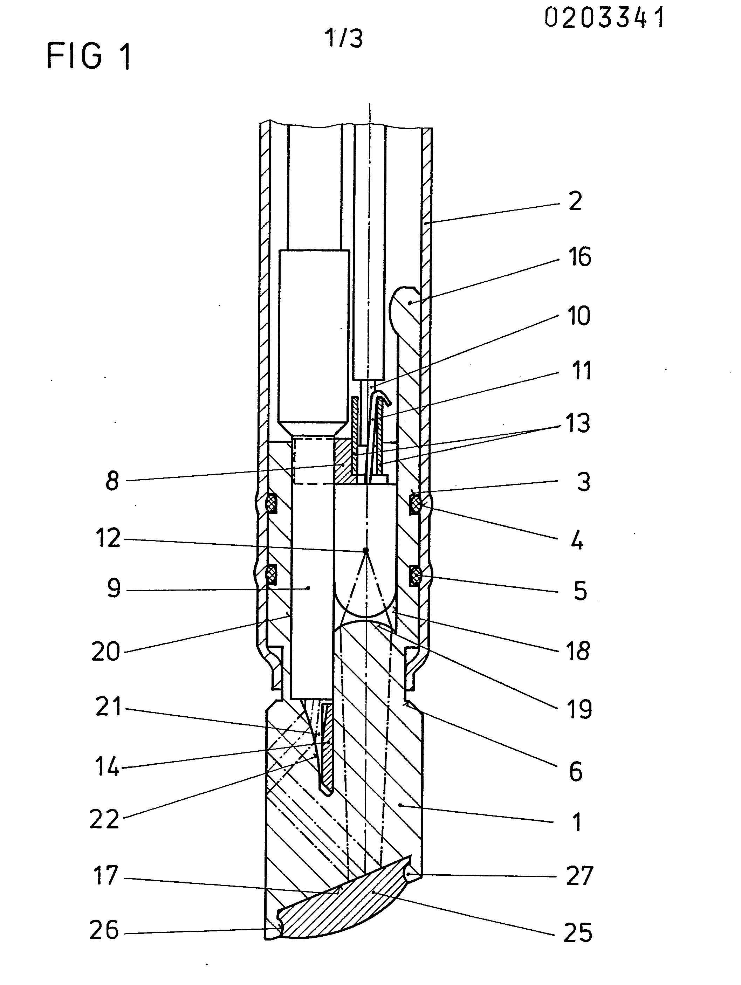

In Fig. 1 weist die im wesentlichen starre Sonde 1 einen runden Querschnitt auf. An der dem im wesentlichen flexiblen Stab 2 zugewandten Seite der Sonde 1 sind auf der Umfangsfläche der Sonde 1 zwei umlaufende Nuten 3 angeordnet. In diese Nuten 3 ist jeweils ein O-Ring 5 eingelegt. Die O-Ringe 5 bestehen vorzugsweise aus einem Material, das härter ist als für reine Dichtungszwecke verwendete Gummi-O-Ringe und härter als das Material des im wesentlichen flexiblen Stabs 2, jedoch weich genug, um sich möglichst vollständig in die Nuten 3 einzuschmiegen. Die Sonde 1 mit den O-Ringen 5 ist in den Stab 2 eingeschoben. Dazu wird vorzugsweise der Stab 2 erwärmt. Dies erleichtert die Montage und dauernde Verformungen der Innenwandung des Stabs 2 bei der Montage werden vermieden. Der Stab 2 weist einen runden Querschnitt und auf der der Sonde 1 zugewandten Seite eine glatte Innenwandung auf. Dabei sind die O-Ringe 5 durch den flexiblen Stab 2 in die Nuten 3 stramm eingepreßt. Die O-Ring 5 pressen ihrerseits eine umlaufende Vertiefung in die Innenwand des flexiblen Stabs 2, da die Innenwand des flexiblen Stabs 2 aufgrund der Flexibilität des Stabmaterials elastisch deformierbar ist. Ist die Sonde 1 in den Stab 2 eingeschoben, so kann man beide Teile wärmebehandeln und so eine bleibende plastische Verformung des Stabs 2 hervorrufen. Dies bewirkt eine noch festere Verbindung von Sonde 1 und Stab 2. Die Vertiefungen sind in der Figur 1 übertrieben dargestellt. Dadurch wird der Raum im Inneren des flexiblen Stabs 2 und der Sonde 1 zuverlässig und dauerhaft gegen die die Vorrichtung umgebende Flüssigkeit abgedichtet. Zugleich wird die Sonde 1 durch die elastischen Kräfte der O-Ringe 5 und des flexiblen Stabs 2 im flexiblen Stab 2 befestigt, so daß bei normaler mechanischer Beanspruchung der Vorrichtung z. B. beim Messen des Ölstands eines Kraftfahrzeugmotors eine zusätzliche Befestigung der Sonde 1 am Stab 2 nicht erforderlich ist. Unterschiedliche Wärmeausdehnungen von Sonde 1 und Stab 2 z. B. im Bereich von $-40\ ^{o}C$ bis $+180\ ^{o}C$ werden durch die elastischen Eigenschaften von O-Ringen 5 und flexiblem Stab 2 ausgeglichen. Dabei bleibt der Raum im Inneren des Stabs 2 und der Sonde 1 weiterhin gegen die umgebende Flüssigkeit abgedichtet und die Sonde 1 ist weiterhin fest mit dem Stab 2 verbunden. Um auch bei extremer mechanischer Beanspruchung der Vorrichtung eine Trennung von Sonde 1 und flexiblem Stab 2 zu vermeiden, weist die Sonde 1 eine dritte Nut 6 in der Fig. 1 unterhalb der ersten beiden Nuten 3 auf, in die das sondenseitige Ende des Stabs 2 eingebördelt ist.

Bei allen Ausführungsbeispielen der erfindungsgemäßen Vorrichtung nach den Figuren ist die elektrische Lichtquelle innerhalb der Sonde 1 angeordnet, um den optischen Weg des Lichts der elektrischen Lichtquelle im lichtleitenden Material kurz zu halten und so mögliche Verluste der Lichtintensität durch Reflexion und Absorption des Lichts an Verunreinigungen und fertigungsbedingten Fehlstellen des lichtleitenden Materials der Sonde 1 zu vermindern. Dabei wird als Lichtquelle eine elektrische Glühlampe 12 verwendet, die auch bei großen Schwankungen der Umgebungstemperatur z. B. im Bereich von - 40 $^{o}$C bis + 180 $^{o}$C des Motoröls eines Verbrennungsmotors gleichbleibende mechaische und lichtelektrische Eigenschaften aufweist. Der elektrische Lichtempfänger ist, in den Figuren nicht dargestellt, außerhalb der Sonde 1 am der Sonde 1 abgewandten Ende des Stabs 2 angeordnet. Als elektrische Lichtempfänger können bekannte Fototransistoren, Fotoelemente, Fotodioden oder Fotowiderstände verwendet werden, die die einfallende Lichtintensität aufgrund photoelektrischer Effekte in elektrische Ausgangsgrößen umwandeln. Solche photoelektrischen Wandler haben jedoch den Nachteil, daß die elektrische Ausgangsgröße stark von der Umgebungstemperatur des Lichtempfängers abhängt. Durch die Anordnung des elektrischen Lichtempfängers außerhalb der Sonde 1 ist der Lichtempfänger nicht den starken Temperaturschwankungen z. B. des Motoröls eines Verbrennungsmotors ausgesetzt und die elektrische Ausgangsgröße des Lichtempfängers ist ein zuverlässiges Maß für die einfallende Lichtintensität.

Um das Licht von der Sonde 1 zu den außerhalb der Sonde 1 angeordneten elektrischen Lichtempfänger zu leiten, weist die Vorrichtung einen Lichtleiter 9 auf, der mit seinem eingangsseitigen Ende wie in Fig. 1 dargestellt in der Sonde 1 angeordnet ist. Das ausgangsseitige Ende des Lichtleiters 9 ist, in den Figuren nicht dargestellt, in bekannter Weise mit dem Lichtempfänger verbunden. Solche insbesondere faseroptischen Lichtleiter 9 weisen längs des optischen Weges des hindurchgeleiteten Lichts nur geringe In-

- 7 -

tensitätsverluste auf und sind genügend flexibel, um sich den Biegungen des biegsamen Stabs 2, z. B. beim Einführen der erfindungsgemäßen Vorrichtung in den Ölsumpf durch die Einstecköffnung herkömmlicher Ölpeilstäbe, anzupassen.

Durch die Anordnung der Lichtquelle 12 innerhalb der Sonde 1 und des Lichtempfängers außerhalb der Sonde 1 werden gute optische Eigenschaften der Vorrichtung bei günstigen Gesamtkosten erreicht, weil für den Aufbau der erfindungsgemäßen Vorrichtung nur ein relativ teurer Lichtleiter 9 erforderlich ist, die Ausgangsgröße des Lichtempfängers jedoch weniger von Schwankungen der Umgebungstemperatur beeinflußt wird. Dies vereinfacht die elektronische Auswertung des Lichtsignals oder ermöglicht sie erst gar.

Zur Aufnahme der Glühlampe 12 weist die Sonde 1 an der dem Stab 2 zugewandten Seite parallel zu der in den Figuren strichpunktiert gezeichneten Längsachse der Sonde 1 eine Sackbohrung 18 auf. Die Glühlampe 12 ist in der Figur 1 mit den elektrischen Anschlußleitungen 11 nach oben weisend in die Sackbohrung 18 eingesteckt. Der Boden der Sackbohrung 18 ist in Richtung auf die Glühlampe 12 linsenförmig konvex ausgewölbt, um das von der Glühlampe 12 ausgesandte Licht beim Eintritt in das lichtleitende Material der Sonde 1 im wesentlichen parallel zur Längsachse der Sonde 1 auszurichten. Die Auswölbung 19 weist eine hochglänzend polierte Oberfläche auf, um mögliche Lichtintensitätsverluste an der Auswölbung 19 durch Reflexion und Streuung des eintreffenden Lichts zu vermeiden.

Das durch die Auswölbung 19 fokussierte Licht trifft auf eine Abschrägung 17, die an der vom Stab 2 abgewandten Seite der Sonde 1 angeordnet ist. Diese Abschrägung 17 schließt vorzugsweise einen Winkel von Alpha = $67,5^{\circ}$ mit der Längsachse der Sonde 1 ein und weist eine lichtundurchlässige Kappe 25 auf, die mit einer Einschnürung 26 in Rastzungen 27 der Sonde 1 einrastet. Der Winkel Alpha kann der zu messenden Flüssigkeit angepaßt werden und richtet sich nach dem Grenzwinkel der Totalreflexion der Flüssigkeit. Die Abschrägung 17 weist an der der Sonde 1 zugewandten Seite eine verspiegelte Oberfläche auf. Das einfallende, leicht gebündelte Licht wird an der Abschrägung 17 reflektiert in Richtung auf den in Fig. 1 dargestellten, von dem Stab 2 abgewandten Teil der Umfangsfläche der Sonde 1. Die verspiegelte Abschrägung 17 wird durch eine Kappe 25 gegen mechanische Zerstörung geschützt. Die Verspiegelung der Abschrägung 17 verhindert Lichtintensitätsverluste durch Absorption und Brechung an der Grenzfläche Abschrägung 17/ Kappe 25. Die Befestigung der Kappe 25 an der Sonde 1 durch eine Rastverbindung 26, 27 ist einfach zu fertigen, leicht zu montieren und insofern kostengünstig herstellbar. Man kann die Abschrägung 17 jedoch auch durch die Abdeckung mit Vergußmasse oder einem Tropfen Kleber vor mechanischer Beanspruchung schützen. Das von der verspiegelten Grenzfläche der Abschrägung 17 reflektierte Lichtstrahlenbündel trifft im wesentlichen im Winkel von 45° auf den in Figur 1 links dargestellten, von dem Stab 2 abgewandten Teil der Umfangsfläche der Sonde 1 und wird abhängig vom die Sonde 1 umgebenden Medium reflektiert in Richtung auf die Längsachse der Sonde 1. Der Winkel beträgt beim gezeigten Ausführungsbeispiel 45° und wird durch den Winkel Alpha bestimmt.

Die Sonde 1 weist an der dem Stab 2 zugewandten Seite parallel zur Längsachse der Sonde 1 neben der Sackbohrung 18 ein Sackloch 20 zur Aufnahme des Lichtleiters 9 auf. Der Lichtleiter 9 ist so tief in das Sackloch 20 eingesteckt, daß seine Eingangsseite die in Fig. 1 obere Begrenzungsfläche eines im wesentlichen keilförmigen Hohlraums 21 bildet, der an das Sackloch 20 anschließend in der Sonde 1 angeordnet ist. Die von der Sackbohrung 18 abgewandte Begrenzungsfläche des im wesentlichen keilförmigen Hohlraums 21 weist in Richtung auf den Hohlraum 21 eine zweite linsenförmig konvexe Auswölbung 22 auf. Diese zweite Auswölbung 22

0203341

lenkt an seiner Grenzfläche lichtleitendes Material/luftgefüllter Hohlraum das vom in Fig. 1 linken Teil der Umfangsfläche der Sonde 1 im wesentlichen im Winkel von 45° reflektierte Lichtbündel in Richtung auf die Eingangsseite des Lichtleiters 9 ab. Der gesamte Strahlengang des Lichts ist in Fig. 1 kleinstrichpunktiert dargestellt. Die Oberfläche der zweiten linsenförmig konvexen Auswölbung 22 ist hochglänzend poliert, um mögliche Lichtintensitätsverluste an der zweiten Auswölbung 22 durch Reflexion oder Streuung des austretenden Lichtstrahls zu vermeiden. Die Eingangsseite des Lichtleiters 9 ist so nah wie möglich an der zweiten Auswölbung 22 angeordnet, um mögliche Lichtintensitätsverluste durch einen möglichst kurzen Lichtweg zwischen Glühlampe 12 und Lichtleiter 9 und eintretendes Streulicht zu verringern.

Die elektrischen Anschlußleitungen 11 der Glühlampe 12 werden durch Klemmhülsen 13 und Löten mit den Stromleitern 10 leitend verbunden. Die Stromleiter 10 sind zusammen mit dem Lichtleiter 9 durch den hohlen flexiblen Stab 2 in Fig. 1 nach oben geführt.

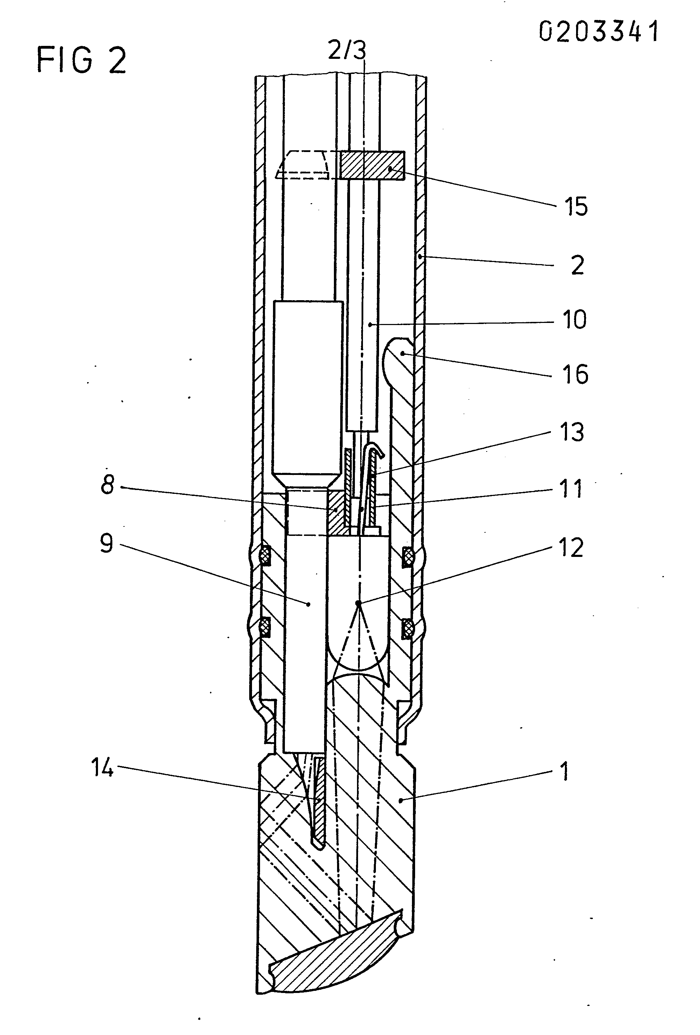

In Fig. 2 sind gleiche Teile oder Teile mit gleicher Funktion wie in Fig. 1 mit den gleichen Bezugszeichen wie in Fig. 1 dargestellt. In der Sonde 1 ist ein Abstandshalter 8 für den Lichtleiter 9, die Glühlampe 12 und die Stromleiter 10 angeordnet. Der Lichtleiter 9 weist in Fig. 2 oben eine Ummantelung auf, die durch eine Hülse am Übergang zum entmantelten Teil des Lichtleiters 9 befestigt ist. Der Lichtleiter 9, die Glühlampe 12 und die Klemmhülsen 13 sind mit Hilfe des Abstandshalters 8 in funktionsbestimmendem geometrischen Abstand einander zugeordnet und durch bekannte Rastverbindungen fest mit der Sonde ausreiß- und verdrehsicher verbunden.

An dem Abstandshalter 8 ist über erste Stege eine optische Abschirmung 14 angeordnet. Die Stege verlaufen, in den Fig. 1 und 2 nicht dargestellt, parallel zur strichpunktiert gezeichneten Längsachse der Sonde 1 vor bzw. hinter der Schnittebene der Fig. 1 und 2 neben 'dem Lichtleiter 9 von dem Abstandshalter 8 zur optischen Abschirmung 14. Die Abschirmung 14 ist an der der Sackbohrung 18 zugewandten Begrenzungsfläche des keilförmigen Hohlraums 21 anliegend angeordnet und verhindert das mögliche Auftreffen von Streulicht auf die Eingangsseite des Lichtleiters 9. Wäre das lichtleitende Material der Sonde 1 absolut rein und würden bei der Fertigung keine Fehlstellen durch Schmutz und z. B. Luftblasen erzeugt, so wäre die Verwendung einer Abschirmung 14 nicht unbedingt notwendig. Die dem Hohlraum 21 zugewandte Seite der Abschirmung 14 kann zur besseren Lichtführung verspiegelt oder hell-reflektierend ausgeführt sein. Weiterhin ist an dem Abstandshalter 8 über zweite Stege eine Zugentlastung 15 angeordnet. Die zweiten Stege verlaufen in den Fig. 1 und 2 nicht dargestellt parallel zur Längsachse der Sonde 1 vor bzw. hinter der Schnittebene der Fig. 1 und 2 neben dem Lichtleiter 9 und den Stromleitern 10 von der Zugentlastung 15 zum Abstandshalter 8. Die Zugentlastung 15 greift an den Kunststoffisolierungen der elektrischen Stromleiter 10 und dem Kunststoffmantel des Lichtleiters in bekannter Weise durch Klemmen an. Die Zugentlastung 15 legt auch die Abstände zwischen den Stromleitern 10, dem Lichtleiter 9 und dem hohlen biegsamen Stab 2 fest. Dadurch wird ein Abknicken der Stromleiter 10 und des Lichtleiters 9 beim Biegen des Stabs 2 und ein Durchscheuern der Isolierungen des Lichtleiters 9 und der Stromleiter 10 und des biegsamen Stabs 2 durch Reiben der Teile gegeneinander vermieden. Der Lichtleiter 9, die Stromleiter 10 und die Glühlampe 12 werden bei der Montage der erfindungsgemäßen Vorrichtung in den Abstandshalter 8 eingesteckt bzw. an der Zugentlastung 15 befestigt, in die Sonde 1 eingesteckt und der Abstandshalter 8 rastet in einem Schnapparm 16, angeordnet an der Sonde 1, ein. Der Schnapparm 16 ist in der Fig. 2 um 90° gedreht gezeichnet. Das Verrasten des Abstandshalters 8

an der Sonde 1 vereinfacht die Montage, weil mit der Befestigung des Lichtleiters 9 und der Klemmhülsen 13 an dem Abstandshalter 8 auch die Einstecktiefe des Lichtleiters 9 und der Glühlampe 12 in die Sonde 1 festgelegt ist. Weitere Justierarbeiten, die bei optischen Einrichtungen kritisch sind, sind nicht erforderlich. Auf den Lichtleiter 9 oder die Stromleiter 10 ausgeübte Kräfte werden von der Zugentlastung 15 abgefangen und über den Abstandshalter 8 und den Schnapparm 16 auf die Sonde 1 übertragen. Durch die vereinfachte Montage werden die Fertigungskosten gesenkt. Die Fertigungskosten werden weiter dadurch gesenkt, daß die Zugentlastung 15 gemeinsam mit der optischen Abschirmung 14, dem Abstandshalter 8 und den ersten und zweiten Stegen einstückig aus lichtundurchlässigem Kunststoff gefertigt ist. Bei Verwendung der erfindungsgemäßen Vorrichtung zum Messen und Überwachen des Motorölfüllstands eines Verbrennungsmotors ist darauf zu achten, daß der verwendete lichtundurchlässige Kunststoff im Temperaturbereich von - 40 $^{\circ}$C bis + 180 $^{\circ}$C auf Dauer seine mechanische Festigkeit behält. Um die gestellten Anforderungen an die Temperaturbeständigkeit zur erfüllen, ist die Sonde 1 gemeinsam mit den Rastzungen 27 und dem Schnapparm 16 einstückig aus dem lichtleitenden Material Polysulfon oder Polyäthersulfon gefertigt. Polysulfon oder Polyäthersulfon behält im Temperaturbereich von - 40 $^{\circ}$C bis + 180 $^{\circ}$C nicht nur seine mechanischen, sondern auch seine günstigen lichtleitenden Eigenschaften. Dieses Material kann im Gegensatz zu Glas ohne Materialspannung z. B. durch Spritzen verarbeitet werden, so daß keine spannungsbedingten sprunghaften Änderungen z. B. des Brechungsindexes bei sich ändernder Temperatur auftreten. Es hat sich gezeigt, daß Polysulfon oder Polyäthersulfon genügend homogen ist und eine ausreichende Durchlässigkeit für Licht aufweist, um für eine elektrische Signalverarbeitung genügend große Lichtintensitätsänderungen zum Lichtempfänger leiten zu können.

Das Ausführungsbeispiel der erfindungsgemäßen Vorrichtung

- 12 -

nach den Figuren 1 und 2 funktioniert folgendermaßen:

Der zu messende und zu überwachende Flüssigkeitsspiegel sei in Fig. 1 und 2 unter das Niveau der Sonde 1 abgesunken. Dann sind die Oberflächen von flexiblem Stab 2 und Sonde 1 frei von der zu messenden Flüssigkeit. Das Licht, das von der Glühlampe 12 ausgesandt wird, wird durch die erste linsenförmig konvexe Auswölbung 19 im wesentlichen parallel zur Längsachse der Sonde 1 fokussiert, trifft auf die Abschrägung 17 und wird an der verspiegelten Fläche der Abschrägung 17 in Richtung auf den in den Fig. 1 und 2 linken Teil der Umfangsfläche der Sonde 1 reflektiert. Diese Umfangsfläche stellt die Grenzfläche zwischen dem Polysulfon oder Polyäthersulfon der Sonde 1 und der die Sonde 1 umgebenden Luft dar. An dieser Grenzfläche lichtleitendes Material/Luft wird das Lichtstrahlenbündel ein zweites Mal in Richtung auf die zweite linsenförmig gewölbte Ausformung 22 reflektiert. Die zweite linsenförmig konvexe Ausformung 22 lenkt das Lichtstrahlenbündel in Richtung auf die Eingangsseite des Lichtleiters 9, der die an der Eingangsseite aufgenommene Lichtintensität der lichtempfindlichen Schicht des an der Ausgangsseite des Lichtleiters 9 angeordneten elektrischen Lichtempfängers zuführt. Wenn also der im folgenden als Meßfläche bezeichnete, in Fig. 1 und 2 linke Teil der Umfangsfläche der Sonde 1 nicht von Flüssigkeit benetzt ist, registriert der Lichtempfänger im wesentlichen die von der Glühlampe 12 ausgesandte Lichtintensität.

Befindet sich andererseits der zu messende und zu überwachende Flüssigkeitsspiegel über dem Niveau der Sonde 1, dann ist die Oberfläche der Sonde 1 und insbesondere die Meßfläche in die Flüssigkeit eingetaucht. Der Strahlengang des von der Glühlampe 12 ausgesandten Lichts ist bis zum Auftreffen des Lichtstrahlenbündels auf die Meßfläche der gleiche wie zuvor beschrieben. Die Meßfläche ist jedoch in die Flüssigkeit eingetaucht, so daß das Licht auf eine Grenzfläche lichtleitendes Material/Flüssigkeit trifft. Infolgedessen wird das Lichtstrahlenbündel nicht in Richtung auf die zweite linsenförmig konvexe Ausformung reflektiert, sondern aus der Sonde 1 heraus in die die Sonde 1 umgebende Flüssigkeit hinein gebrochen. Der Lichtleiter 9 nimmt an seiner Eingangsseite keine Lichtintensität auf. Der elektrische Lichtempfänger registriert keine Lichtintensität auf seiner lichtempfindlichen Fläche. Die nachfolgende elektrische Auswerteschaltung registriert eine entsprechend elektrische Ausgangsgröße des Lichtempfängers.

Der Strahlengang des Lichtstrahlenbündels ist in den Fig. 1 und 2 strichpunktiert dargestellt. Durch die besondere Geometrie des Strahlengangs wird die Meßfläche, an der das Vorhandensein von Flüssigkeit gemessen und überwacht wird, auf der Umfangsfläche der Sonde 1 angeordnet. Dies hat vor allem den Vorteil, daß bei der Messung des Flüssigkeitsstands zäher Flüssigkeiten nach dem Absinken des Flüssigkeitsspiegels an der Sonde 1 in den Fig. 1 und 2 unten anhängende Tropfen das Meßergebnis nicht verfälschen. Auch z. B. bei der Messung des Motorölstands eines Verbrennungsmotors am unteren Teil der Sonde 1 auf der Sonde 1 festhaftende verharzte oder verkohlte Ölreste beeinträchtigen die Messung nicht. Dabei ist der Weg des Lichts im lichtleitenden Material so kurz wie möglich, um die Lichtintensitätsverluste im lichtleitenden Material durch Brechung und Streung an Verunreinigungen und Fertigungsfehlern zu vermeiden.

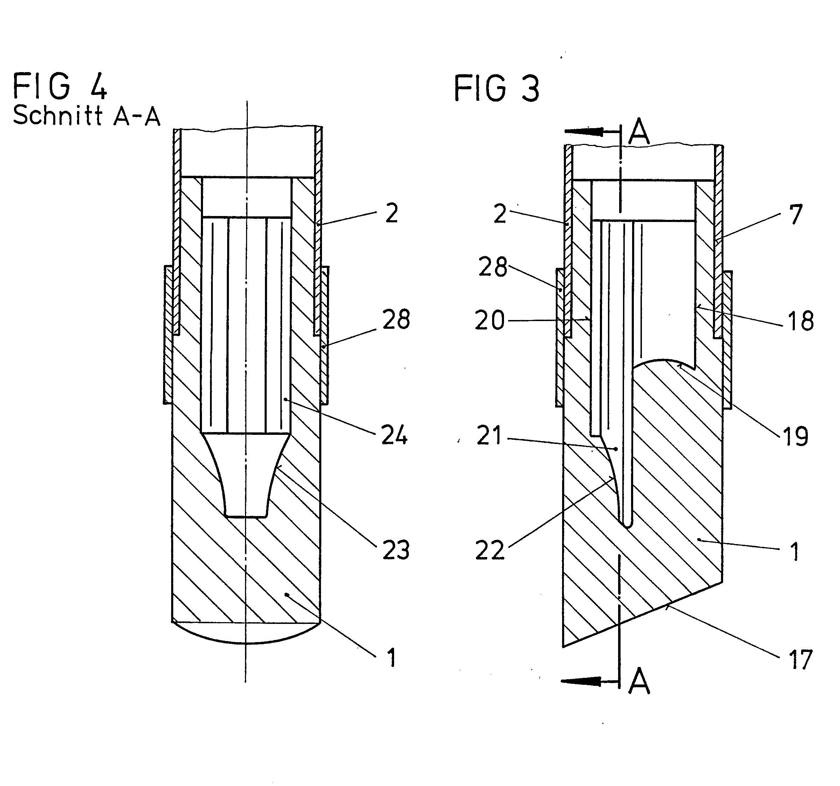

Bei dem Ausführungsbeispiel nach den Figuren 3 und 4 ist vor allem die Befestigung der Sonde 1 am flexiblen Stab 2 geändert. Gleiche Teile oder gleichwirkende Teile wie in Fig. 1 und 2 sind mit den gleichen Bezugszeichen wie in Fig. 1 und 2 dargestellt. In den Fig. 3 und 4 weist die Sonde 1 stabseitig eine Verjüngung 7 mit glatter Umfangsfläche auf. Der Außendurchmesser der Sonde 1 mit im wesentlichen rundem Querschnitt ist im Bereich der Verjüngung 7 um einen Wert reduziert, der etwa der halben Wandstärke des hohlen, flexiblen Stabs 2 entspricht. Die Sonde 1 ist ohne jedes Dichtungs- oder Befestigungsmittel mit der verjüngten Seite in den hohlen, flexiblen Stab eingeschoben. Ein Schrumpfschlauch 28 umfaßt mit seinem einen Teil die Sonde 1 und mit seinem anderen Teil den Stab 2 und ist durch Wärmeeinwirkung fest auf die Sonde 1 und den Stab 2 aufgeschrumpft. Dieser Schrumpfschlauch dichtet das vom Stab 2 und der Sonde 1 eingeschlossene Volumen dauerhaft gegen die umgebende Flüssigkeit ab und sorgt zugleich für die dauerhafte Verbindung von Sonde 1 und Stab 2. Die Dichtwirkung kann dadurch verbessert werden, daß man auf der Umfangsfläche der Verjüngung 7 umlaufend* Man kann Sonde 1 und Stab 2 auch zusätzlich durch eine Klebeverbindung oder Schweißverbindung aneinander befestigen, so daß der Schrumpfschlauch 28 nur die Funktion der Dauerdichtung zwischen Sonde 1 und Stab 2 aufweist.

Bei hohen mechanischen Belastungen und starken Temperaturänderungen in der Umgebung der erfindungsgemäßen Vorrichtung ist es vorteilhaft, die Ausführungsbeispiele der Fig. 1 bis 4 zu einer Ausführungsform der erfindungsgemäßen Vorrichtung zusammenzufassen, indem die Sonde 1 im Bereich der Verjüngung 7 Nuten 3 aufweist, in die O-Ringe 5 eingelegt sind. Die Sonde 1 ist in den hohlen, flexiblen Stab 2 eingesteckt und um Sonde 1 und Stab 2 ist teilweise ein Schrumpfschlauch 28 aufgeschrumpft. Diese Kombination der beiden Ausführungsbeispiele bietet dann durch die Anwendung zweier unabhängig voneinander als Dichtelement und Befestigungseinrichtung wirkender Teile große Beständigkeit der erfindungsgemäßen Vorrichtung gegen mechanische und thermische Einflüsse.

Man kann als hohlen, flexiblen Stab 2 auch einen Schrumpfschlauch verwenden, der im Bereich der Verjüngung 7 über die Sonde 1 gestülpt und durch Wärmeeinwirkung auf die Verjüngung 7 aufgeschrumpft wird. Der Schrumpfschlauch umhüllt dann den Lichtleiter 9 und die Stromleiter 10. Dieses Ausführungsbeispiel ist vorteilhaft, wenn der Stab 2 z. B. aus Gründen der Stabführung besonders flexibel sein soll.
*Rillen anordnet.

In der Fig. 4 weist der keilförmige Hohlraum 21 konvexe in Richtung auf den Stab 2 auseinanderlaufende Seitenflächen 23 auf, die in Ausnehmungen 24 des Sacklochs 20 münden. Dadurch wird die lichtbrechende Fläche der zweiten linsenförmig konvexen Ausformung 22 vergrößert, so daß ein größerer Teil des von der Meßfläche reflektierten Lichts in Richtung auf die Eingangsfläche des Lichtleiters abgelenkt wird. Die meßbare Lichtintensität wird erhöht und der durch den Lichtempfänger aufgenommene Anteil des von der Glühlampe 12 ausgesandten Lichts ist größer. Die vom Füllstand der Flüssigkeit abhängenden Lichtintensitätsunterschiede sind entsprechend größer.

Die in den Fig. 3 und 4 dargestellte Sonde 1 weist eine Abschrägung 17 mit einer Abdeckung aus z. B. lichtundurchlässigem Lack auf.

Patentansprüche:

1. Vorrichtung zur Messung und Überwachung des Füllstandes eines Flüssigkeitsbehälters, insbesondere des Ölstands eines Kraftfahrzeugmotors, mit einer aus einem lichtleitendem Material bestehenden Sonde, deren Oberfläche je nach Benetzung mit der zu messenden Flüssigkeit einen die Oberfläche berührenden, durch das lichtleitende Material geführten Lichtstrahl mehr oder weniger gut reflektiert, wobei die Sonde am unteren Ende eines biegsamen Stabs angeordnet und im Verhältnis zur Stablänge kurz ist, dadurch gekennzeichnet, daß die Sonde (1) an der dem Stab (2) zugewandten Seite mindestens eine umlaufende Nut (3) aufweist, in die mindestens ein Dichtelement eingelegt* ist, daß der Stab (2) mindestens an der der Sonde (1) zugewandten Seite rohrförmig ausgebildet ist und eine glatte Innenwand (4) aufweist und daß die Sonde (1) durch eine Steckverbindung mit dem mindestens einen Dichtelement an der Innenwand (4) dicht anliegend mit dem Stab (2) verbunden ist.
**oder eingespritzt

2. Vorrichtung nach Anspruch 1, dadurch gekennzeichnet, daß das Dichtelement ein O-Ring (5)* ist.

3. Vorrichtung nach Anspruch 1, dadurch gekennzeichnet, daß die Sonde (1) eine zweite Nut (6) aufweist, in die das sondenseitige Ende des Stabs (2) eingebördelt ist.

4. Vorrichtung nach Anspruch 1, dadurch gekennzeichnet, daß die Sonde (1) zum Stabende hin eine Verjüngung (7) aufweist.

5. Vorrichtung nach Anspruch 1, dadurch gekennzeichnet, daß die Vorrichtung einen Schrumpfschlauch (28) aufweist, der mit seinem einen Teil die Sonde (1) und mit seinem anderen Teil den Stab (2) umfaßt.

*oder ein Lippendichtring

6. Vorrichtung nach Anspruch 1, dadurch gekennzeichnet, daß die Sonde (1) am Stab (2) durch eine Klebeverbindung oder eine Schweißverbindung befestigt ist.

7. Vorrichtung nach Anspruch 1, dadurch gekennzeichnet, daß der Stab (2) und/oder die Sonde (1) einen im wesentlichen runden Querschnitt aufweist.

8. Vorrichtung nach Anspruch 1, dadurch gekennzeichnet, daß in der Sonde (1) ein Abstandshalter (8) für den Lichtleiter (9) und die Stromleiter (10) angeordnet ist.

9. Vorrichtung nach Anspruch 8, dadurch gekennzeichnet, daß der Abstandshalter (8) am entmantelten Teil des Lichtleiters (9) angreift.

10. Vorrichtung nach Anspruch 8, dadurch gekennzeichnet, daß die elektrischen Anschlußleitungen (11) der elektrischen Lichtquelle (12) durch Klemmhülsen (13) und/oder durch Löten mit den Stromleitern (10) leitend verbunden sind.

11. Vorrichtung nach Anspruch 9, dadurch gekennzeichnet, daß an dem Abstandshalter (8), insbesondere über erste Stege verbunden, eine optische Abschirmung (14) angeordnet ist.

12. Vorrichtung nach Anspruch 11, dadurch gekennzeichnet, daß die optische Abschirmung (14) ganz oder teilweise verspiegelt oder reflektierend ausgeführt ist.

13. Vorrichtung nach Anspruch 8, dadurch gekennzeichnet, daß an dem Abstandshalter (8), insbesondere über zweite Stege verbunden, eine Zugentlastung (15) angeordnet ist.

14. Vorrichtung nach Anspruch 8, dadurch gekennzeichnet, daß die Sonde (1) einen Schnapparm (16) aufweist, in den der Abstandshalter (8) einrastet.

15. Vorrichtung nach Anspruch 1, dadurch gekennzeichnet, daß die Sonde (1) an dem vom Stab (2) abgewandten Ende eine Abschrägung (17) aufweist.

16. Vorrichtung nach Anspruch 1, dadurch gekennzeichnet, daß die elektrische Lichtquelle (12) innerhalb der Sonde (1) und/oder der elektrische Lichtempfänger außerhalb der Sonde angeordnet ist.

17. Vorrichtung nach Anspruch 16, dadurch gekennzeichnet, daß die Vorrichtung einen Lichtleiter (9) aufweist, der mit seinem eingangsseitigen Ende in der Sonde (1) angeordnet und mit seinem ausgangsseitigen Ende mit dem Lichtempfänger verbunden ist.

18. Vorrichtung nach Anspruch 17, dadurch gekennzeichnet, daß der Lichtempfänger am von der Sonde (1) abgewandten Ende des Stabs (2) angeordnet ist.

19. Vorrichtung nach Anspruch 1, dadurch gekennzeichnet, daß die Sonde (1) an der dem Stab (2) zugewandten Seite parallel zur Längsachse der Sonde (1) eine Sackbohrung (18) zur Aufnahme der elektrischen Lichtquelle (12) aufweist.

20. Vorrichtung nach Anspruch 19, dadurch gekennzeichnet, daß der Boden der Sackbohrung (18) in Richtung auf die elektrische Lichtquelle (12) eine linsenförmig konvexe Auswölbung (19) aufweist.

21. Vorrichtung nach Anspruch 20, dadurch gekennzeichnet, daß die Auswölbung (19) eine hochglänzend polierte Oberfläche aufweist.

22. Vorrichtung nach Anspruch 19, dadurch gekennzeichnet, daß die Sonde (1) an der dem Stab (2) zugewandten Seite parallel zur Längsachse der Sonde (1) neben der Sackbohrung (18) ein Sackloch (20) zur Aufnahme des Lichtleiters (9) aufweist.

23. Vorrichtung nach Anspruch 22, dadurch gekennzeichnet, daß an das Sackloch (20) anschließend ein im wesentlichen keilförmiger Hohlraum (21) in der Sonde (1) angeordnet ist.

24. Vorrichtung nach Anspruch 23, dadurch gekennzeichnet, daß die von der Sackbohrung (18) abgewandte Begrenzungsfläche des keilförmigen Hohlraums (21) in Richtung auf den Hohlraum (21) eine zweite linsenförmig konvexe Auswölbung (22) aufweist.

25. Vorrichtung nach Anspruch 24, dadurch gekennzeichnet, daß die zweite Auswölbung (22) eine hochglänzend polierte Oberfläche aufweist.

26. Vorrichtung nach Anspruch 25, dadurch gekennzeichnet, daß der keilförmige Hohlraum (21) konvex in Richtung auf den Stab (2) auseinanderlaufende Seitenflächen (23) aufweist, die in Ausnehmungen (24) des Sacklochs (20) münden.

27. Vorrichtung nach Anspruch 17, dadurch gekennzeichnet, daß der Stab (2) aus einem Schrumpfschlauch besteht, der den Lichtleiter (9), die Stromleiter (10) und teilweise die Sonde (1) umhüllt.

28. Vorrichtung nach Anspruch 1, dadurch gekennzeichnet, daß der Stab ein Metallrohr mit insbesondere ovalem Querschnitt ist, der an der Sonde mit insbesondere ovalem Querschnitt angebördelt ist.

29. Vorrichtung nach Anspruch 15, dadurch gekennzeichnet, daß die Abschrägung (17) zur Sonde 1 hin insbesondere durch bedampfen oder besputtern verspiegelt ist und/ oder eine lichtundurchlässige Maske aufweist.

30. Vorrichtung nach Anspruch 29, dadurch gekennzeichnet, daß die Maske aus Vergußmasse oder Kleber oder Lack oder einer Kappe (25) gebildet ist, die mit einer Einschnürung (26) in Rastzungen (27) der Sonde (1) einrastet.

31. Vorrichtung nach Anspruch 23, dadurch gekennzeichnet, daß die Abschirmung (14) an der der Sackbohrung (18) zugewandten Begrenzungsfläche des keilförmigen Hohl- raums (21) anliegend angeordnet ist.

32. Vorrichtung nach den Ansprüchen 11 und 13, dadurch gekennzeichnet, daß die Zugentlastung (15) gemeinsam mit der optischen Abschirmung (14), dem Abstandshalter (8) und gegebenenfalls den Stegen einstückig aus lichtundurchlässigem Kunststoff gefertigt ist.

33. Vorrichtung nach den Ansprüchen 14 und 30 , dadurch gekennzeichnet, daß die Sonde (1) gemeinsam mit den Rastzungen (27) und dem Schnapparm (16) einstückig aus Polysulfon oder Polyäthersulfon gefertigt ist.

FIG 1

0203341

FIG 2

0203341

FIG 4
Schnitt A-A

FIG 3

2

28

24

23

1

2

28

20

21

22

7

18

19

1

17

A

A

3/3

0203341

0203341

Nummer der Anmeldung

**Europäisches Patentamt**

**EUROPÄISCHER RECHERCHENBERICHT**

| **EINSCHLÄGIGE DOKUMENTE** | EP 86105282.7 |
|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 3 246 340 (WESTFÄLISCHE METALL) <br> * Fig. 1-5 * <br> -- | 1,7,15, 16-18, 29 | G 01 F 23/04 <br> /F 01 M 11/12 |
| A | DE - A1 - 3 328 140 (KABELMETALL) <br> * Fig. 1,4-6 * <br> -- | 1 | |
| A | CH - A5 - 581 830 (GFELLER) <br> * Ansprüche; Fig. * <br> -- | 1 | |
| A | AT - B - 332 138 (NEŲELEKTRIK) <br> * Fig. 1,2 * <br> ---- | 1 | |

| RECHERCHIERTE SACHGEBIETE (Int. Cl.4) |
|---|
| G 01 F 23/00 <br> F 01 M 11/00 |

Der vorliegende Recherchenbericht wurde für alle Patentansprüche erstellt.

| Recherchenort | Abschlußdatum der Recherche | Prüfer |
|---|---|---|
| WIEN | 11-09-1986 | GRONAU |